# EUROPEAN PATENT SPECIFICATION

(11) **EP 2 149 288 B1**
(45) Date of publication and mention of the grant of the patent: **02.11.2011**
(21) Application number: 09166173.6
(22) Date of filing: 23.07.2009
(51) Int. Cl.: A01D 41/12

(54) **Grain tank seal**
Getreidespeicherdichtung
Joint de réservoir de grains

(30) Priority: 31.07.2008 US 85249 P
(43) Date of publication of application: 03.02.2010
(73) Proprietor: Deere & Company, Moline, IL 61265-8098 (US)
(72) Inventor: Temple, Douglas G., Fulton, IL 61252 (US); Gerber, Merle R., Moline, IL 61265 (US); Nelson, Ronald W., Geneseo, IL 61254 (US)
(74) Representative: Holst, Sönke

(56) References cited:
- EP-A- 0 458 032
- EP-A- 1 564 157
- US-A1- 2003 078 085

## Description

The present invention relates to a grain tank, and more particularly to a grain tank cover utilized on a grain tank of a harvesting machine.

Grain tanks are utilized on harvesting machines, more particularly on agricultural combines. They are used to store grain which has been processed by the harvesting machine.

In normal operation, the harvesting machine travels through the field, gathering crop, separating it from the ground and feeding it to a threshing, separating, and cleaning mechanism located in the harvesting machine. Once the grain has been cleaned, it is placed into an open-topped grain tank located at the very top of the vehicle. There are covers that are typically opened to permit grain to be introduced into the grain tank, and (in the case there are extensions to the grain tank) to expand the capacity of the grain tank to hold more grain than it would if the grain tank covers were closed by using the covers to raise the height of the walls of the grain tank.

Once the grain tank is filled, the operator uses an auger on the harvesting machine to convey the grain into a grain wagon or truck traveling alongside as the crop is harvested. The grain wagon or truck once full will then leave the field to carry the clean grain to a grain elevator or other stationary storage bin.

Grain tank covers are provided to cover the open top of the grain tanks (as well as to increase the capacity of the grain tank when the covers are extended). These covers prevent the entrance of moisture and/or debris into the grain tank. If the grain tank has not been completely emptied, the remaining grain in the grain tank can be protected in the event of rain by immediately closing the covers. Even if there is no grain in the grain tank, however, the covers prevent water, dust, and other debris from being blown into the grain tank.

In one common prior art design, the grain tank covers abut each other with a flexible compressible seals disposed therebetween along the edges to keep water out of the grain tank when the grain tank covers are closed.

One problem with this arrangement is that the grain tank covers are relatively light and flexible which can prevent the covers from abutting each other and providing even pressure on the flexible compressible seals disposed therebetween. If the pressure is irregular or nonexistent, water easily finds a path between the covers and the compressible seals against which they are supposed to press and can run into the grain tank itself. Furthermore, flexible compressible seals are typically made of polymeric materials that are easily torn, broken, or degraded by solar radiation. If the flexible compressible seals are like enough to be compressed by the relatively-lightweight covers, they are also prone to be damaged. Even further, when the grain tank covers are used as a grain tank extension to increase the capacity of the grain tank, grain can become trapped between the cover and the sidewalls of the grain tank, making the grain tank difficult to clean, or can be jammed between the grain tank cover and the grain tank itself, bending the grain tank covers where the grain is jammed and making the flexible compressible seals leak.

What is needed therefore is an improved grain tank seal arrangement that is less susceptible to damage and environmental degradation. What is also needed is an improved grain tank that employs a grain tank seal arrangements such as this. What is also needed is an improved grain tank that prevents grain from being trapped. It is an object of this invention to provide such a grain tank seal arrangement and grain tank.

This object is achieved with the subject matter of claim 1. The dependent claims recite advantageous features of embodiments of the invention.

A covered grain tank used on a harvesting vehicle is provided. It includes a grain tank having a first receptive portion fixed to a top edge of the grain tank; a first cover portion having a first extended portion; and a first hinge connecting the first cover portion to the grain tank, the first extended portion being positioned in the first receptive portion when the first cover portion is in a closed position.

The first extended portion maybe substantially vertical when the first cover portion is in a closed position. The first extended portion may not be horizontally aligned when the first cover portion is in an open position. The first extended portion maybe disposed above an upper surface of the first cover portion a distance sufficient to function as a dam, preventing rain that falls on the exposed upper surface of the first cover portion from running into the grain tank over substantially the entire length of the first cover portion. The upper edge of the first extended portion extends substantially the entire length of the first cover portion and substantially parallel to a first relative axis of rotation of the first cover portion with respect to the grain tank. The first relative axis of rotation may extend parallel to the direction of travel of the harvesting vehicle. The grain tank may have a second receptive portion fixed to a top edge of the grain tank; a second cover portion having a second extended portion; and a second hinge connecting the second cover portion to the grain tank, the second extended portion being positioned in the second receptive portion when the second cover portion is in a closed position, and wherein an upper edge of the second extended portion extends substantially the entire length of the second cover portion and substantially parallel to a second relative axis of rotation of the second cover portion with respect to the grain tank. The second relative axis of rotation may extend parallel to the first relative axis of rotation and the first and second relative axes are substantially coplanar. The second extended portion maybe substantially vertical when the second cover portion is in a closed position. The second extended portion may not be horizontally aligned when the second cover portion is in an open position. The second extended portion maybe disposed above an upper surface of the second cover portion a distance sufficient to function as a dam, preventing rain that falls on the exposed upper surface of the second cover portion from running into the grain tank over substantially the entire length of the second cover portion. The upper edge of the second extended portion may extend substantially the entire length of the second cover portion and substantially parallel to the second relative axis of rotation of the second cover portion. The second relative axis of rotation may extend parallel to the direction of travel of the harvesting vehicle.

An embodiment of the invention is shown in the drawings, in which:
Figure 1 illustrates a combine having a grain tank utilizing an embodiment of a sealing mechanism for a grain tank cover of the present invention.
Figure 2 illustrates a cross-sectional view of the left and right cover portions of the combine of Figure 1.
Figure 3 is a fragmentary detail view of a portion of the grain tank cover of Figure 1 and Figure 2 shown in a closed position.
Figure 4 is another fragmentary detail view of a portion of the grain tank cover of Figures 1-3 illustrated the open position.

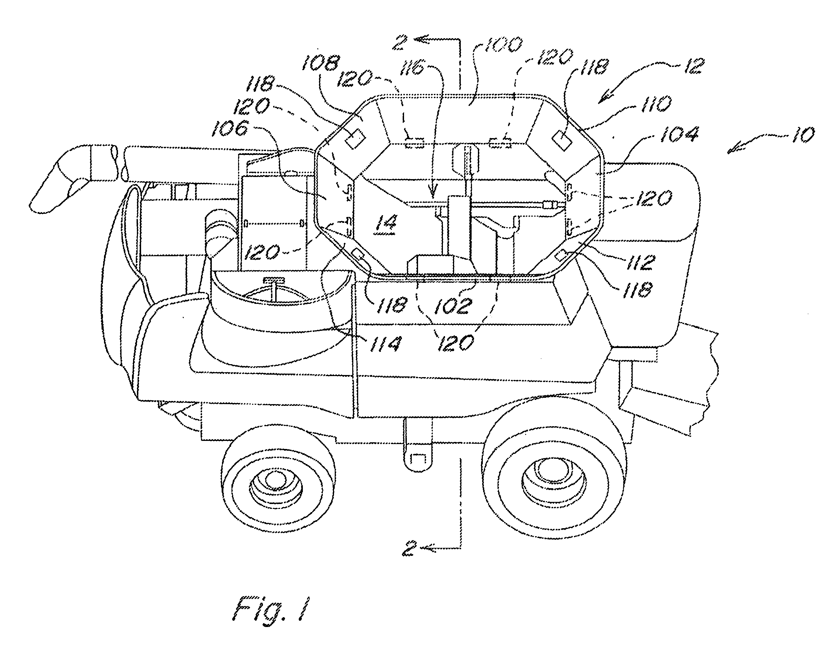

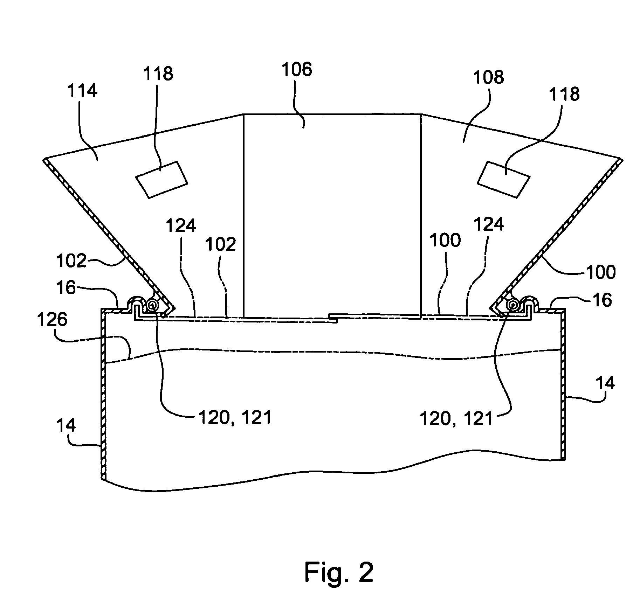

Referring now to the drawings, and more particularly referring to Figures 1 and 2, there is illustrated a harvester 10, also known as a combine 10 having a grain tank 12. Grain tank 12 stores grain until it can be offloaded into a wagon or truck for transport therefrom.

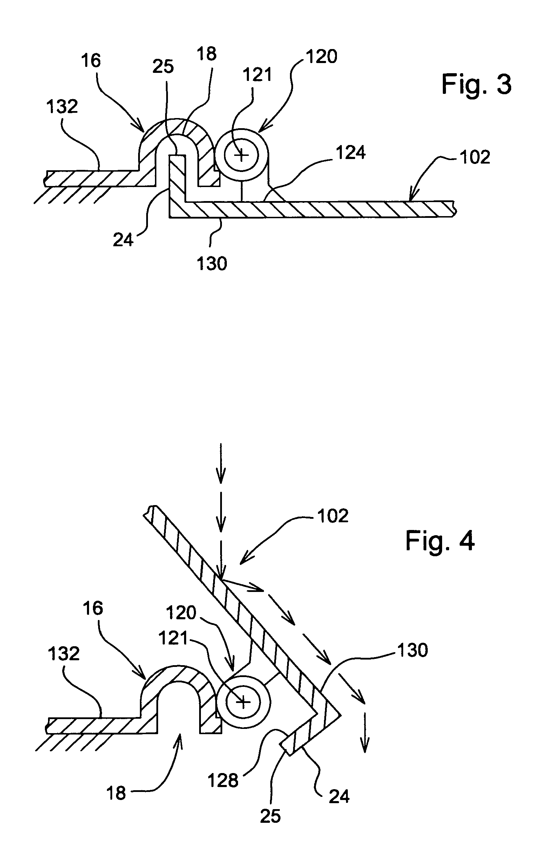

Grain tank 12 includes a lower fixed portion 14 and upper left and right side cover portions 100, 102. Front and rear covers 104, 106 are coupled to left and right side cover portions 100, 102 by flexible corner portions 108, 110, 112, 114. All of the cover portions are hingedly coupled at their lower edges around the upper edges of the central opening 116 of grain tank 12 with hinges 120 to form upwardly extending sidewalls of a grain tank extension that can be pivoted open and closed. In Figures 1-2, cover portions 100, 102, 104, 106 are shown in their open positions ready to receive grain. Hinges 120 constrain the cover portions to pivot with respect to the rest of the harvesting machine (10) about their respective pivotal axes 121 (see Figures 3-4 for an example of one such axis).

When the grain tank 12 is filled with grain, the grain will fill the tank itself, as well as the grain tank extension comprised of the cover portions until it covers transparent windows 118 disposed in each of the flexible corner portions 108, 110, 112, 114. In this manner, the operator or other personnel can determine the capacity of the grain tank by observing the presence of grain through transparent windows 118. Cover portions 100, 102, when folded into their closed position, meet in the middle of the grain tank 12 and a but one another to form a generally planar and closed top surface of the grain tank 12, as best shown in Figure 2. The two cover portions 100,102 that at about axes 121 that are generally parallel and coplanar, lying in a plane generally perpendicular to a vertical direction.

Figure 3-4 illustrates a fragmentary detail view of the right side cover in a closed and open position, respectively. The right side cover portion 102 is identically configured to the left side cover portion 100, but in mirror image relation. Thus the description below regarding the right side cover portion 102 is equally applicable to the left side cover portion 100.

Grain tank 12 has a grain tank ledge 16 along an upper edge of lower fixed portion 14. Incorporated into grain tank ledge 16 is a receptive portion 18. Receptive portion 18 is in the form of an elongate groove or slot that extends substantially the entire length of cover portion 102 and has a downwardly-facing opening on the underside of grain tank ledge 16. The elongate groove is configured to receive an extended portion 24 of cover portion 102 when cover portion 102 is in a closed position.

Referring to Figure 3, when cover portion 102 is in a closed position, extended portion 24 is received and positioned in receptive portion 18 whereby an upper edge 25 of extended portion 24 is surrounded above and on both sides by receptive portion 18. The receptive portion 18 and extended portion 24 do not form a watertight seal against each other.

Upper edge 25 and receptive portion 18 extend substantially the entire length of cover portion 102. Further, upper edge 25 is disposed within receptive portion 18 over substantially the entire length of cover portion 102.

In the closed position, (Fig. 3) extended portion 24 is in a substantially vertical orientation when cover portion 102 is in a substantially horizontal position. In the closed position, the upper edge 25 of extended portion 24 is disposed above the top surface 124 of cover portion 102. Rainwater falling on top surface 124 flows off the surface of the cover portion 102 and is unable to flow (a) underneath the hinge portion, (b) upward into receptive portion 18, (c) over the top of extended portion 24, and (d) downward onto the upper surface 126 (Fig. 2) of the grain in the grain tank 12.

Rain will only follow this path over the top of extended portion 24 and into the grain tank 12 if the water on top of cover portion 102 is deeper than the height of upper edge 25 above the surface of cover portion 102. The height of upper edge 25 is selected based upon the length and angle with respect to vertical of the cover portion 102. The length and angle of cover portion 102 determine whether or rain water will build up to a thickness to overtop upper edge 25. If the height of upper edge 25 above the surface of cover portion 102 is great enough, rain water will flow either to the forward or rearward end of cover portion 102 and run off the cover portion 102 on to the ground without leaking into grain tank 12.

In one preferred arrangement, the planar top surface of cover portion 102 is arranged at a slight angle with respect to the vertical such that it is not quite horizontal when cover portion 102 is closed and the combine 10 is standing on level ground. One way this can be done is by elevating the front end or the rear end of cover portion 102 with respect to the other when it is in the closed position, thereby causing the water to flow respectively rearward off the cover, or forward off the cover portion 102 when it rains.

In this arrangement, the height of extended portion 24 above upper surface 124 of cover portion 102 in the closed position can be reduced, since the maximum depth of water due to the easy flow of rainwater off cover portion 102. Extended portion 24 functions like a dam that prevents water falling on upper surface 124 from flowing over the edge of cover portion 102 and downward onto the grain.

Extended portion 24 can be formed integrally with the adjacent planar portion 130 as a single flat sheet of metal, and then bent upward at an angle of approximately 90° to form extended portion 24. Alternatively, extended portion 24 can be formed separately from adjacent planar portion 130 of cover portion 102 and separately fixed to adjacent planar portion 130. Similarly, receptive portion 18 can be formed together with the adjacent planar portion 132 of the grain tank ledge 16 as a single flat sheet of metal, and then bent first in one direction (the upward direction as shown in Figure 3) at an angle of 90°, and then bent into a 180° curve to point in the opposite direction (the downward direction as shown in Figure 3).

Hinges 120 are fixed to the edge of the grain tank and to the edge of cover portion 102 such that the cover portion 102 can pivot about the edge of the grain tank 12 from the closed position shown in Figure 3 to the open position shown in Figure 4. Figure 4 illustrates the position of cover portion 102 in which it receives grain during harvesting. This open position is also shown in Figures 1-2. Hinges 120 (Figure 1) are coupled to and between cover portion 102 and the grain tank ledge 16 portion of the side walls 14 of grain tank 12. The hinges are configured to provide cover portion 102 with at least 90° of rotation when the cover portion 102 is bigoted from the closed position (Figure 3) to the full open position (Figure 4). Preferably, hinges 120 are configured to provide cover portion 102 with at least 120° of rotation when traversing from the closed position to the full open position. Even more preferably hinges on 20 are configured to provide at least 135° of rotation.

In the full open position, shown herein in Figures 1, 2, and 4, hinge 120 is disposed completely underneath cover 120, such that grain falling into grain tank 12 is directed away from hinge 120. Any material falling downward onto cover portion 102 in the vicinity of hinge 120 (shown as the dashed arrow path in Figure 4) will be deflected by cover portion 102 away from hinge 120 and downward into grain tank 12. Furthermore, any grain that gathers around or on top of inner surface 128 of extended portion 24 will not become trapped during unloading as the level of grain is lowered. If grain is trapped on top of inner surface 128, when cover portion 102 is closed, it will be jammed into the small gap between extended portion 24 and receptive portion 18 (see Figure 3). Fortunately, it will not be trapped since gravity compels grain to slide down inner surface 128 until it falls off upper edge 25 and downward on to top surface 126 of grain in grain tank 12 (see Figure 2).

Grain becomes trapped in this space because the cover portions of the combine 10 serve as grain tank extensions when the covers are unfolded and extend upward from the side walls 14 of grain tank 12. When the covers are used as grain tank extensions, grain fills the grain tank to the height of the transparent windows 118. At this height, the weight of the grain supported by cover portion 102 forces grain upward underneath the grain tank ledge 16, into receptive portion 18 and on top of surface 128. When cover portion 102 and the other cover portions that comprise the cover of grain tank 12 are used as grain tank extensions, it is important to provide a means for automatically clearing inner surface 128 and receptive portion 18. Inner surface 128 provides the self-clearing ability by being disposed an angle sufficient that gravity will automatically clear inner surface 128. This happens automatically once the level of grain in grain tank 12 is lowered below upper edge 25 as seen in Figure 4.

A cover assembly 20 is hingedly connected to lower fixed portion 14 by way of hinges 120. Hinges 120 are configured to allow cover assembly 20 to rotate in excess of ninety degrees from a closed to an open position. Cover assembly 20 includes an extended portion 24 that serves to keep water from entering grain tank 12 when cover 20 is in a closed position. As can be seen in Figs. 2 and 4 when cover 20 is in a closed position extended portion 24 is received into a positioned in receptive portion 18. Receptive portion 18 is an elevated curved portion of grain tank ledge 16, or it may be a flange added thereto. Extended portion 24 is in a substantially vertical position when cover 20 is in a substantially horizontal position, as illustrated in Figs. 2 and 4.

When cover 20 is in an opened position, however, as illustrated in Figs. 3 and 5, cover portion 102 has rotated from a substantially horizontal position beyond a vertical position having rotated over ninety degrees. This movement causes extended portion 24 to be in a non-horizontal position so that any grain accumulating underneath hinges 120 1 inner surface 128 will clear itself based upon the angular position of extended portion 24 when the grain is removed from grain tank 12. In this case, since cover portion 102 has pivoted through an angle of 135°, extended portion 24, which extended vertically upward (Figure 3), now extends downwardly at an angle of -45° (Figure 4).

The present invention advantageously avoids using a flexible seal such as a rubber strip and pop rivets to hold the flexible seal in place in order to seal grain tank ledge 16 to cover portion 102. Extended portion 24 provides a dam to prevent the entrance of water in the closed position and also deflects grain from the hinge when the covers are open as grain is put into grain tank 12 and directs the grain away from hinge 22 as grain is removed therefrom. This release the pressure on grain tank ledge 16 and cover portion 102 since they are not compressed together with a flexible seal disposed there between. The spacing between upper edge 25 and extended portion 24 and receptive portion 18 can vary, providing a wider gap at some places and a narrower gap at other places. If a flexible seal was employed instead of the receptive portion 18/extended portion 24 described herein, these slight changes in spacing over the length of cover portion 102 would provide leakage paths. As long as extended portion 24 is sufficiently high above the upper surface 124 of cover portion 102, these variations in spacing will not cause a leak.

In the description above, we have described cover portion 102 in extensive detail. Cover portion 100 is identically configured but in mirror image. Similarly, cover portions 104, 106 are similarly configured, but are disposed in a side-to-side direction instead of a front-to-rear direction.

## Claims

1. A grain tank (12) for use on a harvesting vehicle (10), the grain tank (12) comprising:
a first receptive portion (18) fixed to a top edge of the grain tank (12), the first receptive portion (18) having a downwardly facing opening;
a first cover portion (100, 102, 104, 106) having a first extended portion (24); and
a first hinge (120) connecting the first cover portion (100, 102, 104, or 106) to the grain tank (12), the first extended portion (24) being positioned in the first receptive portion (18) when the first cover portion (100, 102, 104, or 106) is in a closed position.

2. The grain tank (12) of claim 1, wherein the first extended portion (24) is substantially vertical when the first cover portion (100, 102, 104, or 106) is in a closed position.

3. The grain tank (12) of claim 1, wherein the first extended portion (24) is not horizontally aligned when the first cover portion (100, 102, 104, or 106) is in an open position.

4. The grain tank (12) of claim 1, wherein the first extended portion (24) is disposed above an upper surface of the first cover portion (100, 102, 104, or 106) a distance sufficient to function as a dam over substantially the entire length of the first cover portion (100, 102, 104, or 106), preventing rain that falls on the upper surface of the first cover portion (100, 102, 104, or 106) from running into the grain tank (12).

5. The grain tank (12) of claim 1, wherein the upper edge of the first extended portion (24) extends substantially the entire length of the first cover portion (100, 102, 104, or 106) and substantially parallel to a first relative axis of rotation of the first cover portion (100, 102, 104, or 106) with respect to the grain tank (12).

6. The grain tank (12) of claim 5, wherein the first relative axis of rotation extends parallel to the direction of travel of the harvesting vehicle.

7. The grain tank (12) of claim 5, wherein the grain tank (12) has a second receptive portion fixed to a top edge of the grain tank (12) having a downwardly facing opening;
a second cover portion (100, 102, 104, or 106) having a second extended portion; and
a second hinge (120) connecting the second cover portion to the grain tank (12), the second extended portion being positioned in the second receptive portion when the second cover portion is in a closed position, and wherein an upper edge of the second extended portion extends substantially the entire length of the second cover portion and substantially parallel to a second relative axis of rotation of the second cover portion with respect to the grain tank (12).

8. The grain tank (12) of claim 7, wherein the second relative axis of rotation extends parallel to the first relative axis of rotation and the first and second relative axes are substantially coplanar.

9. The grain tank (12) of claim 7, wherein the second extended portion is substantially vertical when the second cover portion is in a closed position.

10. The grain tank (12) of claim 7, wherein the second extended portion is not horizontally aligned when the second cover portion is in an open position.

11. The grain tank (12) of claim 7, wherein the second extended portion is disposed above an upper surface of the second cover portion a distance sufficient to function as a dam, preventing rain that falls on the exposed upper surface of the second cover portion from running into the grain tank (12) over substantially the entire length of the second cover portion.

12. The grain tank (12) of claim 7, wherein the upper edge of the second extended portion extends substantially the entire length of the second cover portion and substantially parallel to the second relative axis of rotation of the second cover portion.

13. The grain tank (12) of claim 5, wherein the second relative axis of rotation extends parallel to the direction of travel of the harvesting vehicle (10).

14. A harvesting vehicle (10), in particular a combine, with a grain tank (12) according to one of the preceding claims.

## Patentansprüche

1. Korntank (12) zur Verwerdung auf einem Erntefahrzeug (10), wobei der Korntank (12) Folgendes umfasst:
- einen ersten Aufnahmeteil (18), der an einem oberen Rand des Korntanks (12) befestigt ist, wobei der erste Aufnahmeteil (18) eine nach unten weisende Öffnung aufweist;
- einen ersten Abdeckteil (100, 102, 104, 106) mit einem ersten verlängerten Teil (24); und
- ein erstes Scharnier (120), das den ersten Abdeckteil (100, 102, 104 oder 106) mit dem Korntank (12) verbindet, wobei der erste verlängerte Teil (24) in dem ersten Aufnahmeteil (18) positioniert ist, wenn sich der erste Abdeckteil (100, 102, 104 oder 106) in einer geschlossenen Stellung befindet.

2. Korntank (12) nach Anspruch 1, wobei der erste verlängerte Teil (24) im Wesentlichen vertikal ist, wenn sich der erste Abdeckteil (100, 102, 104 oder 106) in einer geschlossenen Stellung befindet.

3. Korntank (12) nach Anspruch 1, wobei der erste verlängerte Teil (24) nicht horizontal ausgerichtet ist, wenn sich der erste Abdeckteil (100, 102, 104 oder 106) in einer geöffneten Stellung befindet.

4. Korntank (12) nach Anspruch 1, wobei der erste verlängerte Teil (24) in einem ausreichenden Abstand über einer Oberseite des ersten Abdeckteils (100, 102, 104 oder 106) angeordnet ist, um als ein Damm über im Wesentlichen die ganze Länge des ersten Abdeckteils (100, 102, 104 oder 106) zu fungieren, der verhindert, dass auf die Oberseite des ersten Abdeckteils (100, 102, 104 oder 106) fallender Regen in den Korntank (12) läuft.

5. Korntank (12) nach Anspruch 1, wobei sich der obere Rand des ersten verlängerten Teils (24) im Wesentlichen über die ganze Länge des ersten Abdeckteils (100, 102, 104 oder 106) und im Wesentlichen parallel zu der ersten relativen Drehachse des ersten Abdeckteils (100, 102, 104 oder 106) bezüglich des Korntanks (12) erstreckt.

6. Korntank (12) nach Anspruch 5, wobei sich die erste relative Drehachse parallel zu der Fahrtrichtung des Erntefahrzeugs erstreckt.

7. Korntank (12) nach Anspruch 5, wobei der Korntank (12) einen zweiten Aufnahmeteil, der an einem oberen Rand des Korntanks (12) befestigt ist und eine nach unten weisende Öffnung aufweist;
einen zweiten Abdeckteil (100, 102, 104 oder 106), der einen zweiten verlängerten Teil aufweist; und
ein zweites Scharnier (120), das den zweiten Abdeckteil mit dem Korntank (12) verbindet, aufweist, wobei der zweite verlängerte Teil in dem zweiten Aufnahmeteil positioniert ist, wenn sich der zweite Abdeckteil in einer geschlossenen Stellung befindet, und wobei sich ein oberer Rand des zweiten verlängerten Teils im Wesentlichen über die ganze Länge des zweiten Abdeckteils und im Wesentlichen parallel zu einer zweiten relativen Drehachse des zweiten Abdeckteils bezüglich des Korntanks (12) erstreckt.

8. Korntank (12) nach Anspruch 7, wobei sich die zweite relative Drehachse parallel zu der ersten relativen Drehachse erstreckt und die erste und die zweite relative Drehachse im Wesentlichen koplanar sind.

9. Korntank (12) nach Anspruch 7, wobei der zweite verlängerte Teil im Wesentlichen vertikal ist, wenn sich der zweite Abdeckteil in einer geschlossenen Stellung befindet.

10. Korntank (12) nach Anspruch 7, wobei der zweite verlängerte Teil nicht horizontal ausgerichtet ist, wenn sich der zweite Abdeckteil in einer geöffneten Stellung befindet.

11. Korntank (12) nach Anspruch 7, wobei der zweite verlängerte Teil in einem ausreichenden Abstand über einer Oberseite des zweiten Abdeckteils angeordnet ist, um als ein Damm zu fungieren, der im Wesentlichen über die ganze Länge des zweiten Abdeckteils verhindert, dass auf die freiliegende Oberseite des zweiten Abdeckteils fallender Regen in den Korntank (12) läuft.

12. Korntank (12) nach Anspruch 7, wobei sich der obere Rand des zweiten verlängerten Teils im Wesentlichen über die ganze Länge des zweiten Abdeckteils und im Wesentlichen parallel zu der zweiten relativen Drehachse des zweiten Abdeckteils erstreckt.

13. Korntank (12) nach Anspruch 5, wobei sich die zweite relative Drehachse parallel zu der Fahrtrichtung des Erntefahrzeugs (10) erstreckt.

14. Erntefahrzeug (10), insbesondere Mähdrescher, mit einem Korntank (12) nach einem der vorhergehenden Ansprüche.

## Revendications

1. Réservoir de grains (12) à utiliser sur un engin agricole (10), le réservoir de grains (12) comprenant:
une première partie de réception (18) qui est fixée à un bord supérieur du réservoir de grains (12), la première partie de réception (18) présentant une ouverture orientée vers le bas;
une première partie de capot (100, 102, 104, 106) comprenant une première partie étendue (24); et
une première charnière (120) qui connecte la première partie de capot (100, 102, 104 ou 106) au réservoir de grains (12), la première partie étendue (24) étant positionnée dans la première partie de réception (18) lorsque la première partie de capot (100, 102, 104 ou 106) se trouve dans une position fermée.

2. Réservoir de grains (12) selon la revendication 1, dans lequel la première partie étendue (24) est sensiblement verticale lorsque la première partie de capot (100, 102, 104, 106) se trouve dans une position fermée.

3. Réservoir de grains (12) selon la revendication 1, dans lequel la première partie étendue (24) n'est pas alignée horizontalement lorsque la première partie de capot (100, 102, 104, 106) se trouve dans une position ouverte.

4. Réservoir de grains (12) selon la revendication 1, dans lequel la première partie étendue (24) est disposée au-dessus d'une surface supérieure de la première partie de capot (100, 102, 104 ou 106) à une distance suffisante pour fonctionner comme un barrage sur sensiblement la totalité de la longueur de la première partie de capot (100, 102, 104 ou 106), empêchant la pluie qui tombe sur la surface exposée de la première partie de capot (100, 102, 104 ou 106) de se répandre dans le réservoir de grains (12).

5. Réservoir de grains (12) selon la revendication 1, dans lequel le bord supérieur de la première partie étendue (24) s'étend sensiblement sur la totalité de la longueur de la première partie de capot (100, 102, 104 ou 106) et sensiblement parallèlement à un premier axe de rotation relatif de la première partie de capot (100, 102, 104 ou 106) par rapport au réservoir de grains (12).

6. Réservoir de grains (12) selon la revendication 5, dans lequel le premier axe de rotation relatif s'étend parallèlement à la direction de déplacement de l'engin agricole.

7. Réservoir de grains (12) selon la revendication 5, dans lequel le réservoir de grains (12) présente une deuxième partie de réception qui est fixée au bord supérieur du réservoir de grains (12) et présente une ouverture orientée vers le bas;
une deuxième partie de capot (100, 102, 104 ou 106) qui présente une deuxième partie étendue; et
une deuxième charnière (120) qui connecte la deuxième partie de capot au réservoir de grains (12), la deuxième partie étendue étant positionnée dans la deuxième partie de réception lorsque la deuxième partie de capot se trouve dans une position fermée, et dans lequel un bord supérieur de la deuxième partie étendue s'étend sensiblement sur la totalité de la longueur de la deuxième partie de capot et sensiblement parallèlement à un deuxième axe de rotation relatif de la deuxième partie de capot par rapport au réservoir de grains (12).

8. Réservoir de grains (12) selon la revendication 7, dans lequel le deuxième axe de rotation relatif s'étend parallèlement au premier axe de rotation relatif, et les premier et deuxième axes de rotation sont sensiblement co-planaires.

9. Réservoir de grains (12) selon la revendication 7, dans lequel la deuxième partie étendue est sensiblement verticale lorsque la deuxième partie de capot se trouve dans une position fermée.

10. Réservoir de grains (12) selon la revendication 7, dans lequel la deuxième partie étendue n'est pas alignée horizontalement lorsque la deuxième partie de capot se trouve dans une position ouverte.

11. Réservoir de grains (12) selon la revendication 7, dans lequel la deuxième partie étendue est disposée au-dessus d'une surface supérieure de la deuxième partie de capot à une distance suffisante pour fonctionner comme un barrage, empêchant la pluie qui tombe sur la surface exposée de la deuxième partie de capot de se répandre dans le réservoir de grains (12) sur sensiblement la totalité de la longueur de la deuxième partie de capot.

12. Réservoir de grains (12) selon la revendication 7, dans lequel le bord supérieur de la deuxième partie étendue s'étend sensiblement sur la totalité de la longueur de la deuxième partie de capot et sensiblement parallèlement au deuxième axe de rotation relatif de la deuxième partie de capot.

13. Réservoir de grains (12) selon la revendication 5, dans lequel le deuxième axe de rotation relatif s'étend parallèlement à la direction de déplacement de l'engin agricole (10).

14. Engin agricole (10), en particulier moissonneuse-batteuse, comprenant un réservoir de grains (12) selon l'une quelconque des revendications précédentes.
